# EUROPEAN PATENT APPLICATION

(11) **EP 2 594 139 A1**
(43) Date of publication of application: **22.05.2013**
(21) Application number: 12001360.2
(22) Date of filing: 29.02.2012
(51) Int. Cl.: A23G 9/22, B23K 31/00

(54) **Method of manufacturing ice confection mold**

(30) Priority: 16.11.2011 US 201113297899
(71) Applicant: Saito Ms Metal Co., Ltd., Isesaki-City Gunma 372-0045 (JP)
(72) Inventor: Saito, Yoshiaki, Isesaki-City Gunma 372-0045 (JP)
(74) Representative: Hering, Hartmut

(57) **Abstract**

A method of manufacturing an ice confection mold which includes a connecting plate having a plurality of openings and includes a plurality of cups each having a reservoir and an opening formed at the upper end of the reservoir, the mold being formed as a result of aligning the openings of the cups to the openings of the connecting plate and welding the openings of the cups to the openings of the connecting plate. The method includes the following processes in sequence: a drawing process in which a pair of metallic plates are press-molded to form a pair of body members; a cup-forming process in which a prototype of the cups is formed as a result of bonding the pair of body members by welding such that the reservoir is formed, the body members being set so as to face each other; a trimming process in which the upper end of the prototype of the cups is trimmed along the opening to form the cups; and a bonding process in which the cups are attached to the connecting plate as a result of bonding the edges of the openings of the cups to the edges of the openings of the connecting plate by welding.

## Description

### BACKGROUND OF THE INVENTION

### FIELD OF THE INVENTION

The present invention relates to a method of manufacturing an ice confection mold which is provided to ice confection-producing equipment.

### DESCRIPTION OF THE RELATED ART

In typical, an ice confection mold is made from stainless steel. The ice confection mold includes a plate having a plurality of openings and includes a plurality of cups having upper ends individually attached to the plurality of openings. The ice confection mold is attached to ice confection-producing equipment. The individual cups are filled with a liquid ice confection material supplied from an ice confection-filling machine, and sticks are then vertically inserted into the cups along the substantially central axis of the cups. The outside of the cups are immersed into cold brine for a certain time period with the result that the liquid ice confection material is solidified, and the sticks are vertically pulled in order to retrieve the resultant products, thereby producing ice confections.

In manufacturing of the ice confection mold, the plate and cups are separately formed, and the cups are attached to a connecting plate by welding or the like. The cups are generally manufactured through the following processes: press-molding a pair of stainless steel plates into a symmetric shape; combining the press-molded body members such that a space which serves as a reservoir is formed inside the resultant product; and welding the pair of body members together with the result that the cups are formed. In this manner, the cups are formed in a large number.

On the other hand, the plurality of openings are formed in the plate. Openings formed at the upper ends of the plurality of cups are aligned with the openings of the plate, and the cups are attached to the plate by welding. In this manner, the ice confection mold is formed. In subsequent processes, the ice confection mold is subjected to acid pickling and electropolishing.

### PROBLEM TO BE SOLVED BY THE INVENTION

In the processes of manufacturing the cups, a pinhole may be generated at a welded portion at which the pair of body members are bonded. The pinhole has a tendency to be generated particularly at an end of the welded portion, the vicinity of the openings of the cups in other words. The pinhole often further enlarges during the acid pickling. During the production of an ice confection, a problem has arisen, in which the brine enters the inside of the cups from the pinhole with the result that the quality of the ice confection is decreased. In view of these disadvantages, it is an object of the present invention to provide a method of manufacturing an ice confection mold which enables an ice confection with good quality to be produced.

### SUMMARY OF THE INVENTION

### MEANS TO SOLVE THE PROBLEM

According to a Claim 1 of the invention, a method of manufacturing an ice confection mold is provided,
the ice confection mold including
a connecting plate having a plurality of openings,
a plurality of cups each having a reservoir and an opening formed at the upper end of the reservoir and
being formed as a result of aligning the openings of the cups to the openings of the connecting plate and welding the openings of the cups to the openings of the connecting plate, and
the method including the following processes in sequence:
a drawing process in which a pair of metallic plates are press-molded to form a pair of body members;
a cup-forming process in which a prototype of the cups is formed as a result of bonding the pair of body members by welding such that the reservoir is formed, the body members being set so as to face each other;
a trimming process in which the upper end of the prototype of the cups is trimmed along an opening to form the cups; and
a bonding process in which the cups are attached to the connecting plate as a result of bonding the edges of the openings of the cups to the edges of the openings of the connecting plate by welding.

According to a Claim 2 of the invention, in the method of manufacturing an ice confection mold of the Claim 1,
the body members formed in the drawing process each have
the reservoir and
a protrusion formed at the periphery of the reservoir, and
a protrusion-trimming process in which the protrusion is trimmed is performed between the drawing process and the cup-forming process.

According to a Claim 3 of the invention, in the method of manufacturing an ice confection mold of any one of the Claims 1 and 2,
stainless steel having one surface to which luster is imparted is used as the metallic plate, and
the cups are formed such that the luster-imparted surface forms an inner surface.

According to a Claim 4 of the invention, in the method of manufacturing an ice confection mold of any one of the Claims 1 and 3,
the bonding process includes aligning the edges of the openings of the cups to the edges of the openings of the connecting plate and then bonding the cups to the connecting plate by welding on the side of the upper surface of the connecting plate, and
the bonding process is followed by a nickel-brazing process in which the bonded portion between each of the cups and the connecting plate is nickel-brazed on the side of the lower surface of the connecting plate.

According to a Claim 5 of the invention, in the method of manufacturing an ice confection mold of any one of the Claims 1 to 4,
the bonding process is followed by a connector-attaching process in which a connector is attached in order to connect the lower ends of the plurality of cups to each other.

According to a Claim 6 of the invention, in the method of manufacturing an ice confection mold of any one of the Claims 1 and 5,
the bonding process is followed by a heating process in which solution heat treatment is conducted.

According to a Claim 7 of the invention, in the method of manufacturing an ice confection mold of any one of the Claims 1 and 3,
the bonding process includes aligning the edges of the openings of the cups to the edges of the openings of the connecting plate and then bonding the cups to the connecting plate by welding on the side of the upper surface of the connecting plate, and
the following processes are performed in sequence after the bonding process, the processes including
a nickel brazing filler-applying process in which a paste-like nickel brazing filler is applied to the bonded portion between each of the cups and the connecting plate on the side of the lower surface of the connecting plate, and
a heating process in which solution heat treatment is conducted and the nickel brazing filler applied to the bonded portion between each of the cups and the connecting plate is heated.

According to a Claim 8 of the invention, in the method of manufacturing an ice confection mold of the Claim 5,
the bonding process includes aligning the edges of the openings of the cups to the edges of the openings of the connecting plate and then bonding the cups to the connecting plate by welding on the side of the upper surface of the connecting plate,
the following processes are performed in sequence after the bonding process, the processes including
a connector-attaching process in which a connector is attached in order to connect the lower ends of the plurality of cups to each other,
a nickel brazing filler-applying process in which a paste-like nickel brazing filler is applied to the bonded portion between each of the cups and the connecting plate on the side of the lower surface of the connecting plate and a paste-like nickel brazing filler is applied to the bonded portion between the lower end of each of the cups and the connector, and
a heating process in which solution heat treatment is conducted, the nickel brazing filler applied to the bonded portion between each of the cups and the connecting plate is heated, and the nickel brazing filler applied to the bonded portion between each of the cups and the connector is heated.

### ADVANTAGES OF THE INVENTION

According to the Claim 1 of the invention, the method of manufacturing the ice confection mold is provided, the ice confection mold having a connecting plate with a plurality of openings and a plurality of cups with reservoirs and openings formed at the upper ends of the reservoirs and being formed as a result of aligning the openings of the cups to the openings of the connecting plate and welding the openings of the cups to the openings of the connecting plate. The method includes the following processes in sequence: the drawing process in which a pair of metallic plates are press-molded to form a pair of body members; the cup-forming process in which a prototype of the cups is formed as a result of bonding the pair of body members by welding such that the reservoir is formed, the body members being set so as to face each other; the trimming process in which the upper end of the prototype of the cups is trimmed along an opening to form the cups; and the bonding process in which the cups are attached to the connecting plate as a result of bonding the edges of the openings of the cups to the edges of the openings of the connecting plate by welding.

By virtue of the trimming process, a pinhole which is generated in the vicinity of the openings in the formation of the cups can be cut off. The problem in which brine enters the inside of the cups from the pinhole during production of an ice confection with the result that the quality of the ice confection is decreased can be accordingly overcome. The method of manufacturing an ice confection mold which enables an ice confection with good quality to be produced can be consequently provided.

According to the Claim 2 of the invention, the body members formed in the drawing process each have the reservoir and the protrusion formed at the periphery of the reservoir, and the protrusion-trimming process in which the protrusion is trimmed is performed between the drawing process and the cup-forming process.

The trimming of the protrusion enables the side surfaces of the formed cups to be planarized. Furthermore, since the protrusion is trimmed before the cups have been completed, the protrusion can be easily and accurately trimmed as compared with a case in which the trimming is conducted after the cups have been completed.

According to the Claim 3 of the invention, the stainless steel having one surface to which luster is imparted is used as the metallic plate, and the cups are formed such that the luster-imparted surface forms an inner surface. By virtue of such an advantageous configuration, water is drained well, and cleaning can be easily and steadily conducted. In the case of sequentially producing two different types of ice confections containing different components, cleaning is therefore steadily conducted after the production of one type of ice confection. The component contained in one type of ice confection can be accordingly prevented from being mixed in the other type of ice confection. In addition, since the cups have smooth inner surfaces, an ice confection with good appearance can be produced. Furthermore, since friction between the inner surfaces of the cups and solidified ice confections can be decreased, the ice confections can be withdrawn from the cups without the occurrence of damage in the surfaces of the ice confections, and the ice confections can be smoothly withdrawn.

According to the Claim 4 of the invention, the bonding process includes aligning the edges of the openings of the cups to the edges of the openings of the connecting plate and then bonding the cups to the connecting plate by welding on the side of the upper surface of the connecting plate, and the bonding process is followed by the nickel-brazing process in which the bonded portion between each of the cups and the connecting plate is nickel-brazed on the side of the lower surface of the connecting plate.

By virtue of such a process, even in the case where the outer edge of the upper ends of the cups has a shape larger than that of the openings formed in the connecting plate with the result that gaps are generated, a weld overlay of the nickel brazing filler is formed between the lower surface of the connecting plate and each of the cups, so that corrosion due to the intrusion of dusts into the gaps can be prevented. In addition, the brine can be prevented from entering the gaps, and a mold with good drainage can be therefore manufactured. Furthermore, reinforcement on the side of the lower surface of the plate enables bonding strength between each of the cups and the connecting plate to be enhanced.

According to the Claim 5 of the invention, the bonding process is followed by the connector-attaching process in which a connector is attached in order to connect the lower ends of the plurality of cups to each other. In the case of withdrawing an ice confection which has been cooled in the cups to be solidified, problems such as a bending and instability of the lower portion of the cups can be therefore prevented.

According to the Claim 6 of the invention, the bonding process is followed by the heating process in which solution heat treatment is conducted. By virtue of this process, the metallic properties, which have been changed resulting from the welding, of stainless steel in the vicinity of the welded portion can be recovered. The vicinity of the welded portion can be accordingly prevented from rusting, thereby being able to produce an ice confection with good quality.

According to the Claim 7 of the invention, the bonding process includes aligning the edges of the openings of the cups to the edges of the openings of the connecting plate and then bonding the cups to the connecting plate by welding on the side of the upper surface of the connecting plate, and the following processes are performed in sequence after the bonding process: the nickel brazing filler-applying process in which a paste-like nickel brazing filler is applied to the bonded portion between each of the cups and the connecting plate on the side of the lower surface of the connecting plate; and the heating process in which solution heat treatment is conducted and the nickel brazing filler applied to the bonded portion between each of the cups and the connecting plate is heated.

By virtue of such processes, a nickel brazing filler-heating process in which the cups are bonded to the connecting plate by using a nickel brazing filler can be performed.at the same time as the solution heat treatment which serves to recover the metallic properties of the stainless steel. A heating process for nickel-brazing can be accordingly omitted.

According to the Claim 8 of the invention, the bonding process includes aligning the edges of the openings of the cups to the edges of the openings of the connecting plate and then bonding the cups to the connecting plate by welding on the side of the upper surface of the connecting plate, and the following processes are performed in sequence after the bonding process: the connector-attaching process in which a connector is attached in order to connect the lower ends of the plurality of cups to each other; the nickel brazing filler-applying process in which a paste-like nickel brazing filler is applied to the bonded portion between each of the cups and the connecting plate on the side of the lower surface of the connecting plate and a paste-like nickel brazing filler is applied to the bonded portion between the lower end of each of the cups and the connector; and the heating process in which solution heat treatment is conducted, the nickel brazing filler applied to the bonded portion between each of the cups and the connecting plate is heated, and the nickel brazing filler applied to the bonded portion between each of the cups and the connector is heated.

In this method, three processes can be simultaneously conducted, namely the solution heat treatment process to recover the metallic properties of the stainless steel, the process of bonding the cups to the connecting plate using a nickel brazing filler, and the process of bonding the cups to the connector using a nickel brazing filler. The heat treatment process for nickel-brazing can be therefore omitted.

### BRIEF DESCRIPTION OF THE DRAWINGS

[Fig. 1]

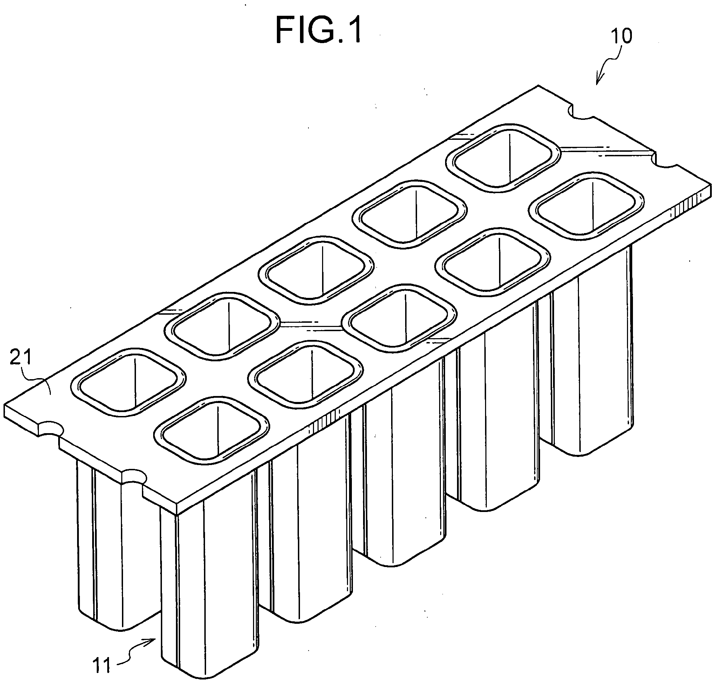

   Fig. 1 is a perspective view illustrating an ice confection mold which is manufactured by a method of manufacturing an ice confection mold according to an embodiment of the invention.
[Fig. 2]

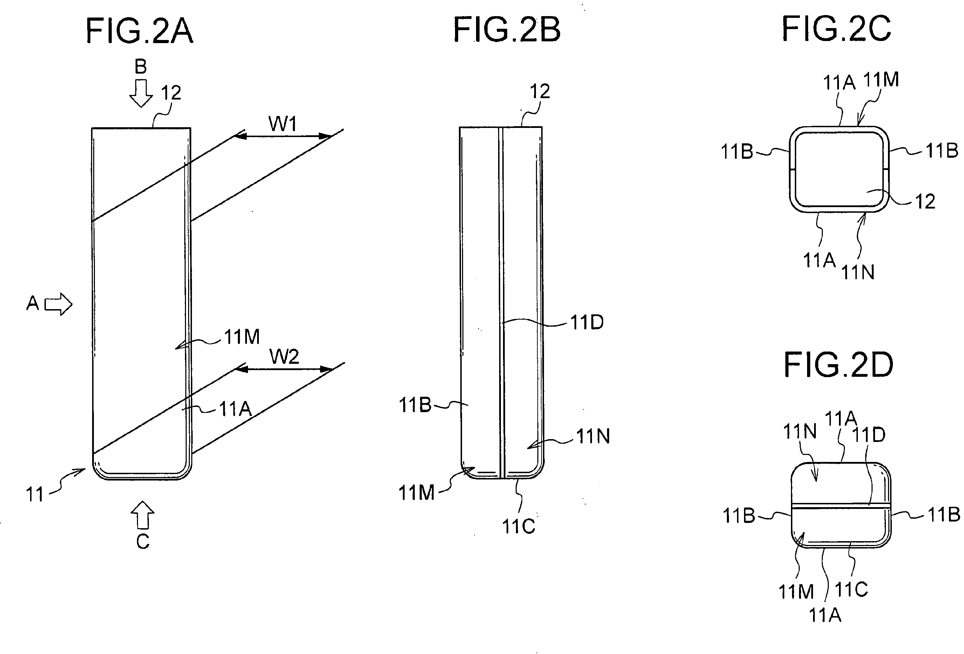

   Fig. 2A is a lateral view illustrating a cup, Fig. 2B is a lateral view illustrating the cup viewed from a direction indicated by the arrow A in Fig. 2A, Fig. 2C is a plan view illustrating the cup viewed from a direction indicated by the arrow B in Fig. 2A, and Fig. 2D is a bottom view illustrating the cup viewed from a direction indicated by the arrow C in Fig. 2A.
[Fig. 3]

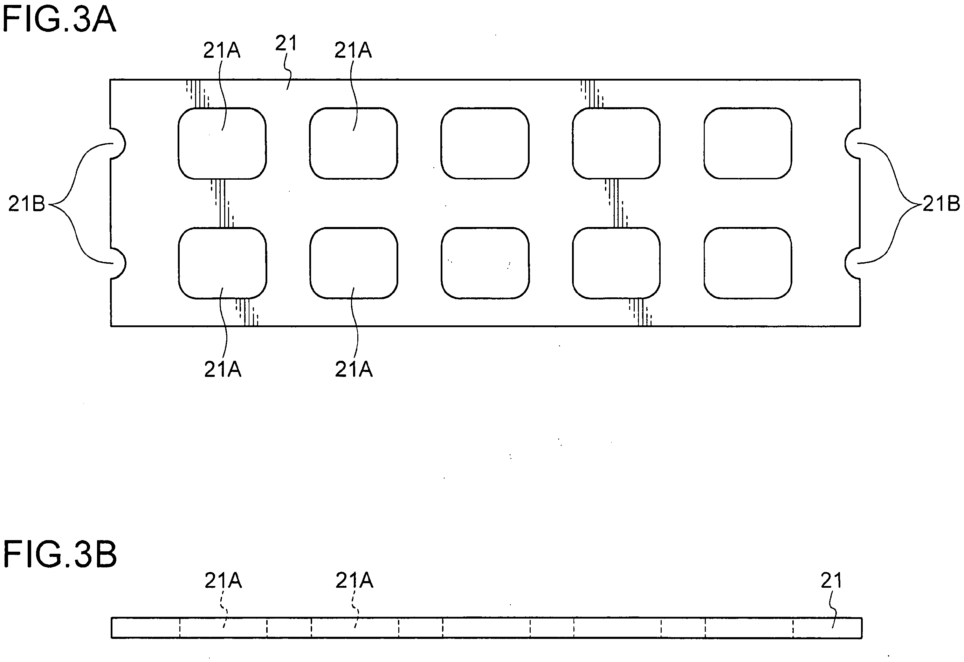

   Fig. 3A is a plan view illustrating a connecting plate, and Fig. 3B is a lateral view illustrating the connecting plate.
[Fig. 4]

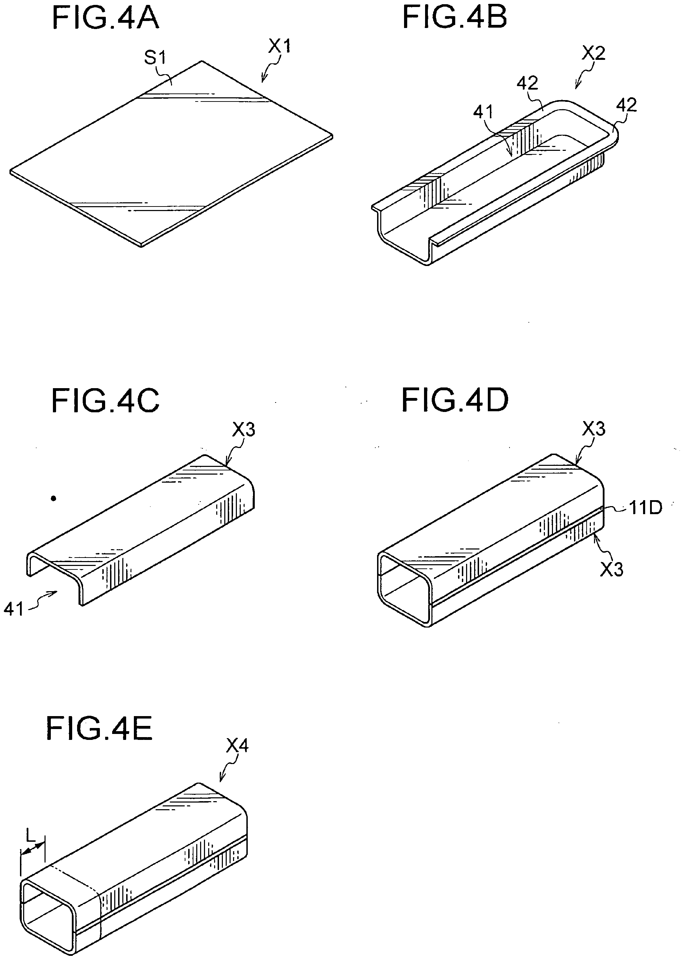

   Figs. 4A to 4E each illustrate a process of manufacturing the cup used for the ice confection mold.
[Fig. 5]

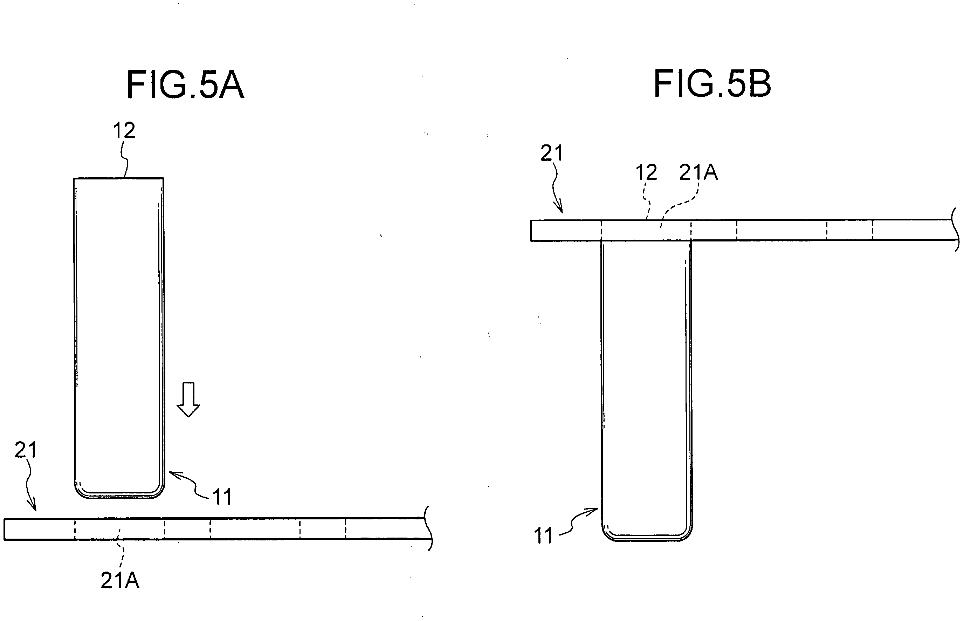

   Figs. 5A and 5B each illustrate a process of attaching the cup to the connecting plate.
[Fig. 6]

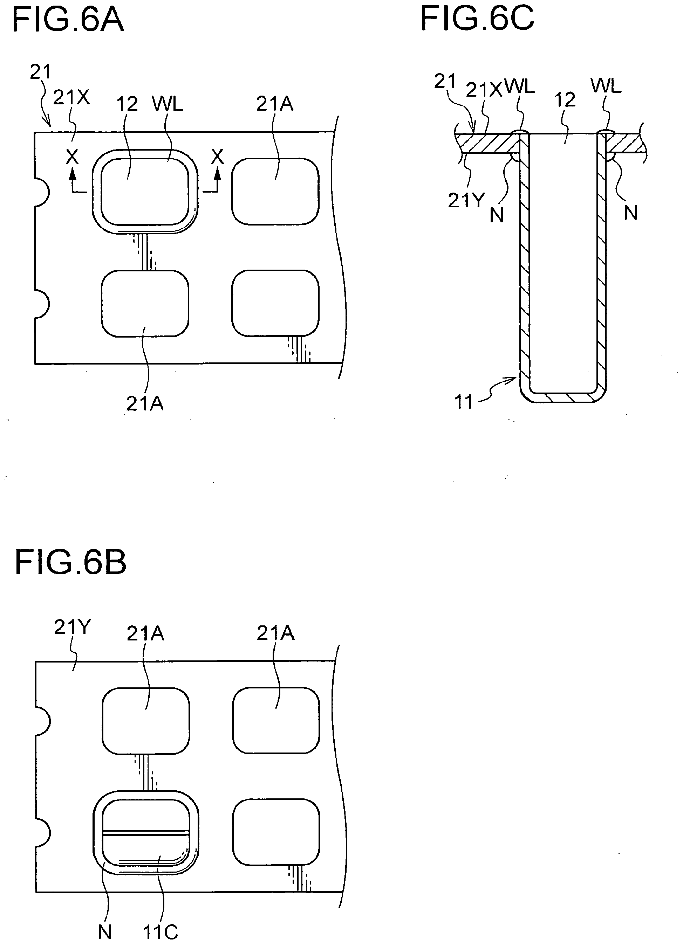

   Fig. 6A is a lateral view illustrating the connecting plate to which one cup has been attached, Fig. 6B is a bottom view illustrating the cup-attached connecting plate in Fig. 6A, and Fig. 6C is a cross-sectional view illustrating the cup-attached connecting plate taken along the allow X-X in Fig. 6A.
[Fig. 7]

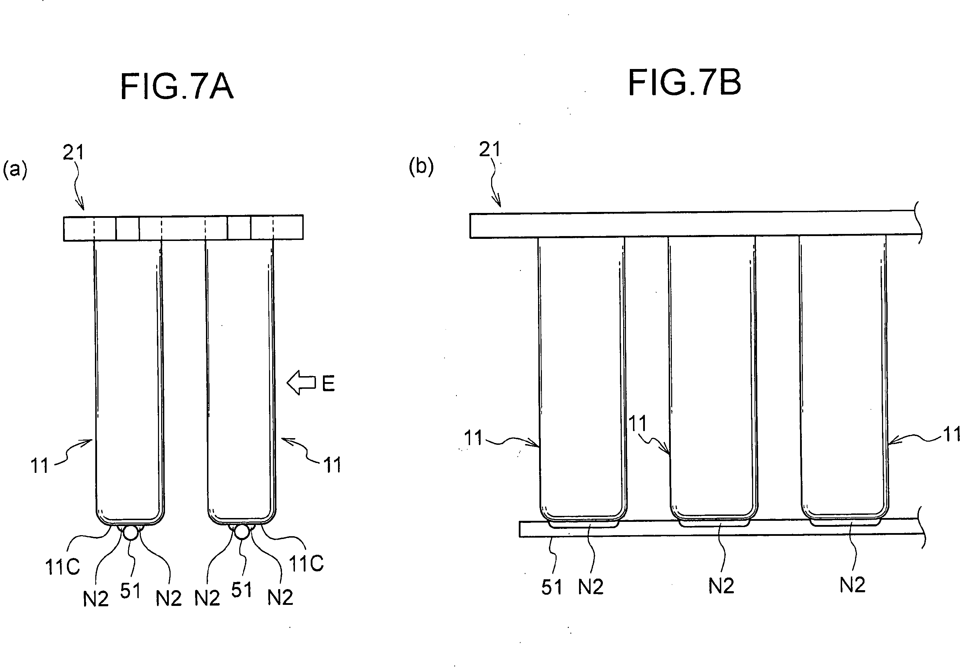

   Fig. 7A is a front view illustrating another example of the ice confection mold, and Fig. 7B is a lateral view illustrating the ice confection mold viewed from a direction indicated by the arrow E in Fig. 7A.

### DETAILED DESCRIPTION OF THE INVENTION

### BEST MODE OF EMBODYING THE INVENTION

The best mod of embodiments of the invention will be hereinafter described with reference to the drawings. Fig. 1 is a perspective view illustrating an ice confection mold 10 as an example of embodiments of the invention. The ice confection mold 10 includes a plurality of cups 11 and connecting plate 21. The cups 11 are arranged in the longitudinal direction of the connecting plate 21 so as to form two lines. The cups 11 are made from a stainless steel plate. As illustrated in Figs. 2A to 2D, the cups 11 each have a substantially rectangular cross section including a pair of side surfaces 11A and a pair of side surfaces 11B. The cups 11 each have an opening 12 formed at the upper end thereof and a bottom 11C formed at the lower end thereof. In order to form the cups 11, a pair of body members 11M and 11N are set to face each other and are then bonded by welding (the reference sign 11D indicates a welded portion). In this case, the side surfaces 11B have a slight taper structure extending from the top to the bottom such that the side surfaces 11A of the cups 11 have the lower width W2 slightly smaller than the upper width w1 thereof.

With reference to Figs. 3A and 3B, the connecting plate 21 has a plurality of substantially rectangular openings 21A formed in a substantially rectangular stainless steel plate having a certain thickness. Two semicircular attachment portions 21B are formed at the both ends of the connecting plate 21 and contribute to fixing with bolts. Although the openings 21A are formed so as to have a shape similar to the peripheral shape of the openings 12 formed at the upper ends of the cups 11, the shape of the openings 21A are formed so as to be slightly smaller than that of the openings 12.

A process of manufacturing the cups 11 will be described with reference to Figs. 4A to 4E. A stainless steel plate X1 (Fig. 4A) having a surface S1 to which luster is imparted is press-molded to form a first cup prototype (body member) X2 (drawing process: Fig. 4B). In this case, SUS316L is used as the stainless steel plate X1, for example. The first cup prototype X2 has a reservoir 41 formed at the central region thereof and has a protrusion 42 formed along the periphery of the reservoir 41, the reservoir 41 having a hollow shape. In the formation the reservoir 41 by the press-molding, the protrusion 42 is naturally formed as a result of pressing the periphery of the stainless steel plate X1 with a pair of press molds.

Then, the protrusion 42 is completely trimmed (protrusion-trimming process: Fig. 4C). The protrusion 42 is trimmed, thereby being able to planarize the side surfaces of the cups 11 to be formed. In typical, a pair of first cup prototypes X2 are combined while the protrusions 42 of the individual cup prototypes X2 face each other, and the protrusions 42 are welded together. Heat is further applied to the protrusions 42 which have been welded together, and the protrusions 42 are pressed toward the reservoir 41 while being melted. The melting protrusions 42 are applied on the surfaces of the cup so as to form a layered structure, thereby processing the surface of the cup into a planar shape. However, the pushed protrusions 42 often have difficulty in extending on the surfaces of the cup with the result that a projection is formed in the reservoir 41. In this case, a problem arises, in which the shape of an ice confection to be produced is adversely affected. Conducting the protrusion-trimming process is therefore important to produce an ice confection having a desired shape.

Two second cup prototypes (body members) X3 which are produced as a result of completely trimming the protrusions 42 are bonded by welding while facing each other (cup-forming process: Fig. 4D). A welded portion is indicated by the reference sign 11D. Through this process, a third cup prototype (prototype of cup) X4 is formed (Fig. 4E). The upper end of the third cup prototype X4 is trimmed in a certain length L, thereby forming the cup 11 (trimming process). The length L is preferably in the range from 5 to 10 mm. By virtue of this trimming, pinholes which are frequently generated at the end of the molded portion 11D can be removed.

As illustrated in Figs. 5A and 5B, the cup 11 is arranged such that the opening 12 faces upward and is inserted into the opening 21A of the connecting plate 21 from above. In this case, the opening 12 of the cup 11 is formed so as to have an outer shape substantially the same as the inner shape of the opening 21A of the connecting plate 21, and the cup 11 engages with the connecting plate 21 such that the upper end of the cup 11 is substantially flush with the upper surface of the connecting plate 21.

As illustrated in Figs. 6A to 6C, the upper end of the cup 11 is bonded to the connecting plate 21 by welding on the side of the surface 21X of the connecting plate 21 (bonding process). In addition, the cup 11 is bonded to the connecting plate 21 using a nickel-brazing filler N on the side of the rear surface 21Y of the connecting plate 21 (nickel-brazing process). In this case, the welded portion is indicated by the reference sign WL. The nickel-brazing filler N is in the form of paste and is applied to the rear surface 21Y of the connecting plate 21. The resultant product is then heated in a furnace, thereby bonding the connecting plate 21 to the cup 11 on the side of the rear side. The nickel-brazing process enables the bonding strength between the connecting plate 21 and cup 11 to be enhanced. Furthermore, brine can be prevented from entering a fine structure formed on the back of the bonded portion (in particular, a small gap generated between the opening 21A and the outer profile of the cup 11), thereby being able to enhance drainage between the connecting plate 21 and the cup 11. In this manner, all of the cups 11 are attached to the connecting plate 21, thereby forming the ice confection mold 10.

The ice confection mold 10 is then subjected to solution heat treatment in a vacuum furnace (heating process). Although the metallic properties of the stainless steel of the ice confection mold 10 has changed resulting from the welding in the vicinity of the welded portions 11D and WL, the metallic properties are recovered in this process. By virtue of this process, the vicinity of the welded portions 11D and WL can be prevented from rusting, thereby being able to produce an ice confection with good quality.

In this example, although the side surfaces 11B have a slight taper structure extending from the top to the bottom such that the side surfaces 11A of the cups 11 have the lower width W2 slightly smaller than the upper width wl thereof, the side surfaces 11A of the cups 11 may be formed so as to have the lower width W2 with the same dimension as that of the upper width W1 thereof. In this case, the procedure in which the cup 11 is inserted into the opening 21A of the connecting plate 21 from above as illustrated in Figs. 5A and 5B is eliminated. The cup 11 may be accordingly inserted into the opening 21A of the connecting plate 21 from the bottom.

### FURTHER EMBODIMENT 1

This example is different from the above example in the procedures after the bonding-process in which the upper end of the cup 11 is bonded to the connecting plate 21 by welding on the side of the surface 21X of the connecting plate 21. Except this change, the other process configurations for manufacturing the ice confection mold 10 are similarly employed as in the case of the above example.

In this example, in place of the nickel-brazing process, the paste-like nickel brazing filler N is applied to a position corresponding to the welded portion WL between the cup 11 and connecting plate 21 on the side of the rear surface 21Y of the connecting plate 21 (nickel brazing filler-applying process). The ice confection mold 10 is then disposed in a vacuum furnace for solution heat treatment (heating process).

By virtue of this process, the nickel brazing filler-heating process which enables the cup 11 to be bonded to the connecting plate 21 using the nickel brazing filler N can be performed at the same time as the solution heat treatment which is conducted to recover the metallic properties of stainless steel. In other words, the heat solution process for nickel-brazing can be omitted.

### FURTHER EMBODIMENT 2

This example is different from the first example in that a connector-attaching process is performed. Except this change, the other process configurations for manufacturing the ice confection mold 10 are similarly employed as in the case of the above example.

As illustrated in Figs. 7A and 7B, one round bar-shaped reinforcement bar (connector) 51 is bonded to each of the two lines of the cups 11 by welding. The reinforcement bar 51 is bonded to the bottoms 11C of the individual cups 11 by welding. By virtue of this process, one reinforcement bar 51 enables the bottoms of a plurality of cups 11 to be connected to those of the adjacent cups 11 linearly arranged. The upper ends of all of the cups 11 are bonded to the connecting plate 21 and are therefore stabilized.

In addition, the bottoms of the cups 11 are connected through the reinforcement bar 51 in each of the lines, and the bottoms of the cups 11 are therefore free from bending and instability. In the case of withdrawing solidified ice confections which have been cooled in the cups 11 of which the upper and lower ends are connected to those of the adjacent cups 11, the lower ends of the cups 11 can be accordingly prevented from being bent and instable. The reinforcement bar 51 is attached after the process of welding the upper ends of the cups 11 to the connecting plate 21 (connector-attaching process).

After the reinforcement bar 51 is bonded to the bottoms 11C of the cups 11, a nickel brazing filler N2 is applied to the bonded portions. The nickel brazing filler N2 is in the form of paste and is applied to the bonded portion between the reinforcement bar 51 and the bottoms 11C of the cups 11. The resultant product is then heated in a furnace, thereby bonding the reinforcement bar 51 to the cups 11. This nickel-brazing process enables the bonding strength between the reinforcement bar 51 and the cups 11 to be enhanced. In addition, brine can be prevented from entering the fine structure of the bonded portion, thereby being able to enhance drainage between the cups 11 and the reinforcement bar 51. Except these changes, the structure of the ice confection mold 10 and the other process configurations for manufacturing the ice confection mold 10 are similarly employed as in the case of the above examples.

The whole body of the ice confection mold 10 is then subjected to solution heat treatment in a vacuum furnace.

The reinforcement bar 51 is not limited to a round bar, and a square bar may be used. Furthermore, in place of the round bar, the connector (reinforce bar 51) may be provided in the form of a plate.

The connector-attaching process may be performed previous to the nickel-brazing process in which the cups 11 are bonded to the connecting plate 21 using the nickel brazing filler N.

### FURTHER EMBODIMENT 3

This example is different from the second example in the procedures after the bonding process in which the upper end of the cup 11 is bonded to the connecting plate 21 by welding on the side of the surface 21X of the connecting plate 21. Except this change, the other process configurations for manufacturing the ice confection mold 10 are similarly employed as in the case of the example 2.

After the connecting plate 21 is bonded to the cups 11 (bonding process), the reinforcement bar 51 is welded to the bottoms 11C of the cups 11 (connector-attaching process). The paste-like nickel brazing filler N is then applied to a position corresponding to the welded portion WL between the cups 11 and connecting plate 21 on the side of the rear surface 21Y of the connecting plate 21, and a paste-like nickel brazing filler is applied to the bonded portion between the reinforcement bar 51 and the bottoms 11C of the cups 11 (nickel brazing filler-applying process).

The ice confection mold 10 is subsequently disposed in a vacuum furnace and is subjected to solution heat treatment. By virtue of this process, three processes can be simultaneously performed: the solution heat treatment which is conducted to recover the metallic properties of stainless steel, the nickel brazing filler-heating process which enables the cups 11 to be bonded to the connecting plate 21 using the nickel brazing filler N, and the other nickel brazing filler-heating process which enables the cups 11 to be bonded to the reinforcement bar 51 using the nickel brazing filler material N2. In other words, the heating process for nickel-brazing can be omitted.

## Claims

1. A method of manufacturing an ice confection mold which includes a connecting plate having a plurality of openings and includes a plurality of cups each having a reservoir and an opening formed at the upper end of the reservoir, the mold being formed as a result of aligning the openings of the cups to the openings of the connecting plate and welding the openings of the cups to the openings of the connecting plate, and the method comprising the following processes in sequence:
a drawing process in which a pair of metallic plates are press-molded to form a pair of body members;
a cup-forming process in which a prototype of the cups is formed as a result of bonding the pair of body members by welding such that the reservoir is formed, the body members being set so as to face each other;
a trimming process in which the upper end of the prototype of the cups is trimmed along an opening to form the cups; and
a bonding process in which the cups are attached to the connecting plate as a result of bonding the edges of the openings of the cups to the edges of the openings of the connecting plate by welding.

2. The method of manufacturing an ice confection mold according to Claim 1, wherein
the body members formed in the drawing process each have the reservoir and a protrusion formed at the periphery of the reservoir, and
a protrusion-trimming process in which the protrusion is trimmed is performed between the drawing process and the cup-forming process.

3. The method of manufacturing an ice confection mold according to any one of Claims 1 and 2, wherein
stainless steel having one surface to which luster is imparted is used as the metallic plate, and
the cups are formed such that the luster-imparted surface forms an inner surface.

4. The method of manufacturing an ice confection mold according to any one of Claims 1 and 3, wherein
the bonding process includes aligning the edges of the openings of the cups to the edges of the openings of the connecting plate and then bonding the cups to the connecting plate by welding on the side of the upper surface of the connecting plate, and
the bonding process is followed by a nickel-brazing process in which the bonded portion between each of the cups and the connecting plate is nickel-brazed on the side of the lower surface of the connecting plate.

5. The method of manufacturing an ice confection mold according to any one of Claims 1 to 4, further comprising
a connector-attaching process in which a connector is attached in order to connect the lower ends of the cups to each other, the connector-attaching process being performed after the bonding process.

6. The method of manufacturing an ice confection mold according to any one of Claims 1 and 5, further comprising
a heating process in which solution heat treatment is conducted, the heating process being performed after the bonding process.

7. The method of manufacturing an ice confection mold according to any one of Claims 1 and 3, wherein
the bonding process includes aligning the edges of the openings of the cups to the edges of the openings of the connecting plate and then bonding the cups to the connecting plate by welding on the side of the upper surface of the connecting plate, and
the following processes are performed in sequence after the bonding process, the processes including
a nickel brazing filler-applying process in which a paste-like nickel brazing filler is applied to the bonded portion between each of the cups and the connecting plate on the side of the lower surface of the connecting plate, and
a heating process in which solution heat treatment is conducted and the nickel brazing filler applied to the bonded portion between each of the cups and the connecting plate is heated.

8. The method of manufacturing an ice confection mold according to Claim 5, wherein
the bonding process includes aligning the edges of the openings of the cups to the edges of the openings of the connecting plate and then bonding the cups to the connecting plate by welding on the side of the upper surface of the connecting plate, and
the following processes are performed in sequence after the bonding process, the processes including
a connector-attaching process in which a connector is attached in order to connect the lower ends of the plurality of cups to each other,
a nickel brazing filler-applying process in which a paste-like nickel brazing filler is applied to the bonded portion between each of the cups and the connecting plate on the side of the lower surface of the connecting plate and a paste-like nickel brazing filler is applied to the bonded portion between the lower end of each of the cups and the connector, and
a heating process in which solution heat treatment is conducted, the nickel brazing filler applied to the bonded portion between each of the cups and the connecting plate is heated, and the nickel brazing filler applied to the bonded portion between each of the cups and the connector is heated.
